# EUROPEAN PATENT APPLICATION

(11) **EP 1 111 824 A2**
(43) Date of publication of application: **27.06.2001**
(21) Application number: 00250354.8
(22) Date of filing: 26.10.2000
(51) Int. Cl.: H04H 1/00

(54) **Apparatus and method for receiving and storing broadcast schedule information transmitted with a broadcast programme**

(30) Priority: 28.10.1999 JP 30756199
(71) Applicant: NEC CORPORATION, Tokyo (JP)
(72) Inventor: Ito, Noriko, Tokyo (JP)
(74) Representative: Patentanwälte Wenzel & Kalkoff

(57) **Abstract**

An information accumulating apparatus for a mobile communication tool includes a profile information storing section (103) for previously storing favorite information of a user and a location obtaining section (107) for obtaining current locations of the user and the information accumulating apparatus. A broadcast schedule interpreting section (102) interprets a broadcast schedule (200) received by a receiving section (101), grasps a schedule showing that necessary information is broadcasted based on profile information in a profile information storing section (103) and the location of the user, produces a receiving schedule and a broadcast schedule obtaining plan list and memorizes them in a receiving schedule section. A timer (105) starts the receiving section (101) at a time designated by the receiving schedule in the receiving schedule memorizing section (104), and the information received by the receiving section (101) is accumulated in an information accumulating section (106). When necessary information for the user is broadcasted, the information accumulating apparatus for the mobile communication tool can be automatically started and the necessary information can be accumulated.

## Description

### BACKGROUND OF THE INVENTION

### Field of the Invention

The present invention relates to an information accumulating apparatus and more particularly to information accumulating apparatus for a mobile communication tool for receiving a broadcast schedule, for referring to a user profile and current existing locations of a user and the information accumulating apparatus and for effectively storing information necessary for the user.

### Description of the Related Art

Because of increased use of videocassette recorders and tape recorders, more often programs are recorded and enjoyed later. Recently, a digital recording apparatus for domestic use has also been developed in which a television program is digitalized and is recorded in random access storage media such as a HDD (Hard Disk Drive).

Television stations and radio stations insert CMs (Commercial Messages) of companies and the like which are sponsors of programs at intervals in the programs, and thereby a user is made to view and listen to commercials (advertisements) in television broadcasting and radio broadcasting. Japanese Patent Application Laid-open No. Hei9-214875 discloses a technique selecting only commercial signals among television signals, recording the commercial signals and forming a database.

Also, in digital satellite multi-channel broadcast, an EPG (Electronic Program Guide) that is information corresponding to a television program list is sent by a data broadcast and a user can search for a preferable program using this data. Japanese Patent Application Laid-open Nos. Heill-196385 and Heill-196390 disclose data broadcasting systems in which programming information suitable to a user is automatically accumulated and the user can enjoy the programming information whenever it is convenient to the user.

When a case is considered that the above-mentioned system is applied to an apparatus for a driver and a pedestrian, it is preferable to provide additional following functions in order to improve convenience for the user. In this case, when the driver and the pedestrian accumulate programs and commercial messages that are digitalized data, it is necessary to refer to not only information about the favorites of the user but also information about a current location of the user and to extract only necessary information for the user.

Further, when the user such as the driver, the pedestrian or the like starts an information accumulating apparatus, it is time that the user wants to search information while moving. Therefore, at the time at which the user starts the information accumulating apparatus, it is desirable that desired information is already stored. That is, though the user does not clearly start the information accumulating apparatus, it is necessary to already accumulate information desired by the user.

### SUMMARY OF THE INVENTION

In view of the above, it is an object of the present invention to provide an information accumulating apparatus for a mobile communication tool capable of accumulating desired information by receiving a broadcast schedule and automatically starting the information accumulating apparatus when information related to a current location and favorites of a user is available.

According to a first aspect of the present invention, there is provided an information accumulating apparatus for a mobile communication tool including:
a receiving section for receiving a broadcast including a program, a commercial and a broadcast schedule;
a profile information storing section for storing at least information including a favorite of a user;
a location obtaining section for obtaining a current location of the information accumulating apparatus;
a broadcast schedule interpreting section for interpreting the broadcast schedule in the broadcast received by the receiving section;
a receiving schedule memorizing section for memorizing a receiving schedule including the broadcast schedule transmitted from the broadcast schedule interpreting section and broadcast time of the broadcast schedule;
a timer for referring to the receiving schedule memorized in the receiving schedule memorizing section and for starting the receiving section at a designated time; and
an information accumulating section for accumulating information such as the program and the commercial received by the receiving section.

In context with the foregoing, a preferable mode is one wherein the broadcast schedule interpreting section interprets the broadcast schedule received by the receiving section, grasps a schedule indicating that necessary information for the user is broadcasted based on profile information in the profile information storing section and starts the receiving section at the broadcast time of the necessary information for the user to produce the receiving schedule to receive the necessary information.

Another preferable mode is one wherein the broadcast schedule interpreting section interprets the broadcast schedule received by the receiving section, grasps a broadcast schedule indicating that related information to an existing location of the user obtained by the location obtaining section and starts the receiving section at the broadcast time of the related information to produce the receiving schedule for receiving the necessary information.

Furthermore, a preferable mode is one wherein the timer, when time designated by the receiving schedule comes, gives a start request and an extracting request of the necessary information for the user, though the user does not use the information accumulating apparatus.

According to a second aspect of the present invention, there is provided an information accumulating method for a mobile communication tool including:
a step of receiving a broadcast including a program, a commercial and a broadcast schedule;
a step of storing at least information including a favorite of a user;
a step of obtaining a current location of an information accumulating apparatus;
a step of interpreting the broadcast schedule in the broadcast;
a step of memorizing a receiving schedule including the broadcast schedule and broadcast time of the broadcast schedule;
a step of referring to the receiving schedule;
a step of starting to receive the broadcast at a designated time; and
a step of accumulating information such as the program and the commercial.

According to another aspect of the present invention, there is provided media for storing a program used for an information accumulating apparatus for a mobile communication tool, the program including:
a step of receiving a broadcast including a program, a commercial and a broadcast schedule;
a step of storing at least information including a favorite of a user;
a step of obtaining a current location of an information accumulating apparatus;
a step of interpreting the broadcast schedule in the broadcast;
a step of memorizing a receiving schedule including the broadcast schedule and broadcast time of the broadcast schedule;
a step of referring to the receiving schedule;
a step of starting to receive the broadcast at a designated time; and
a step of accumulating information such as the program and the commercial.

With the above configurations, it is possible to obtain a broadcast schedule previously and to accumulate only necessary information for the user while the necessary information is broadcasted. Therefore, it is possible to accumulate only necessary information for the user without burden to the user and it is possible to search latest information when the user wants to obtain information.

Furthermore, it is possible to obtain the broadcast schedule and to accumulate only the information concerning favorites of the user and the location information among broadcasted information based on the obtained broadcast schedule. Also, though the user does not clearly request to start, it is possible to refer to the broadcast schedule and to record information while necessary information for the user is broadcasted. Therefore, effective information accumulation can be carried out. Also, when the user searches information using the information accumulating apparatus for the mobile communication tool, latest information is stored, therefore, it is possible to search information effectively.

### BRIEF DESCRIPTION OF THE DRAWINGS

The above and other objects, advantages and features of the present invention will be more apparent from the following description taken in conjunction with the accompanying drawings in which:
Fig. 1 is a block diagram showing an information accumulating apparatus for a mobile communication tool according to an embodiment of the present invention;
Fig. 2 is a flowchart showing a processing operation of a receiving section in the information accumulating apparatus according to the embodiment of Fig. 1.
Fig. 3 is a flowchart showing a processing operation of a broadcast schedule interpreting section in the information accumulating apparatus according to the embodiment of Fig. 1; and
Fig. 4 is a view showing an example of a broadcast schedule.

### DETAILED DESCRIPTION OF THE PREFERRED EMBODIMENTS

Best modes of carrying out the present invention will be described in further detail using an embodiment with reference to the accompanying drawings.

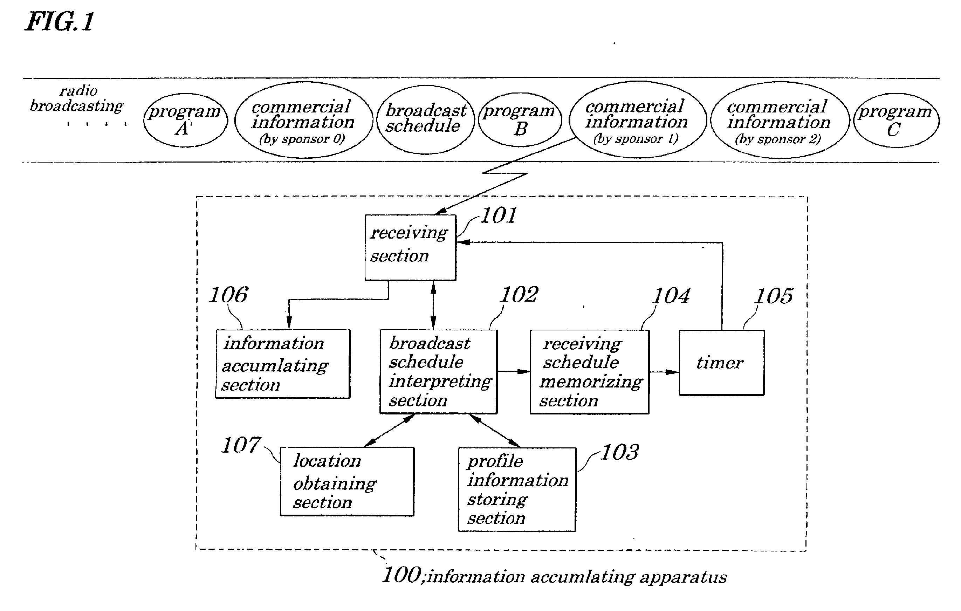

As shown in Fig. 1, an information accumulating apparatus 100 for the mobile communication tool is provided with a receiving section 101, a broadcast schedule interpreting section 102, a profile information storing section 103, a receiving schedule memorizing section 104, a timer 105, an information accumulating section 106 and a location obtaining section 107.

The receiving section 101 receives a broadcast including programs, commercial messages and a broadcast schedule.

The profile information storing section 103 stores information about favorites of a user.

The location obtaining section 107 obtains a current location of the user and a current location of the mobile communication tool.

The broadcast schedule interpreting section 102 interprets a broadcast schedule 200 received by the receiving section 101 and grasps a schedule indicating that necessary information for the user is broadcasted.

The receiving schedule memorizing section 104 memorizes a receiving schedule and a grasped broadcast schedule produced in the broadcast schedule interpreting section 102.

The timer 105 refers to the receiving schedule in the receiving schedule memorizing section 104 and starts the receiving section 101 at a designated time.

The information accumulating section 106 accumulates information received by the receiving section 101.

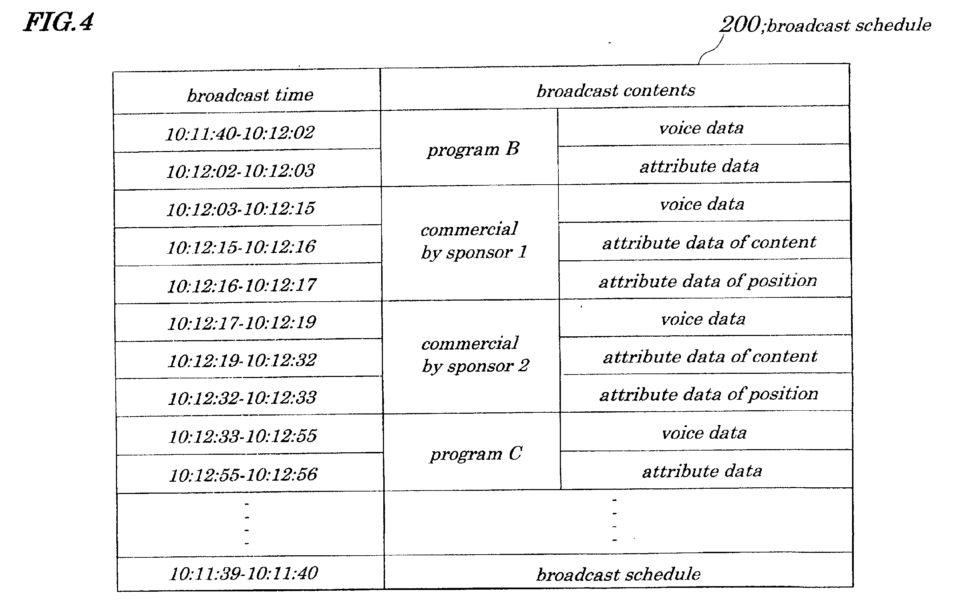

For example, as shown in Fig. 4, the broadcast schedule 200 is a schedule from a current time to 24 hours later and includes broadcast time and a broadcast content list, that is, the broadcast schedule 200 shows a schedule of the radio broadcasting in Fig. 1. The broadcast content list includes a broadcast schedule, programs, commercial information for each sponsor. The broadcast schedule is included in the broadcast schedule 200. The programs have contents such as music and news and include attribute data. The commercial information for each sponsor includes commercial message voice data, attribute data of commercial information and attribute data of a location (such as latitude, longitude and address).

Now, explanations will be given of a processing operation of the embodiment according to the present invention with reference to Fig. 1 through Fig. 3. Here, explanation will be given of a case in which only commercials necessary for the user are accumulated. Though no explanation is given, the processing operation does not vary in a case in which only programs necessary for the user are accumulated.

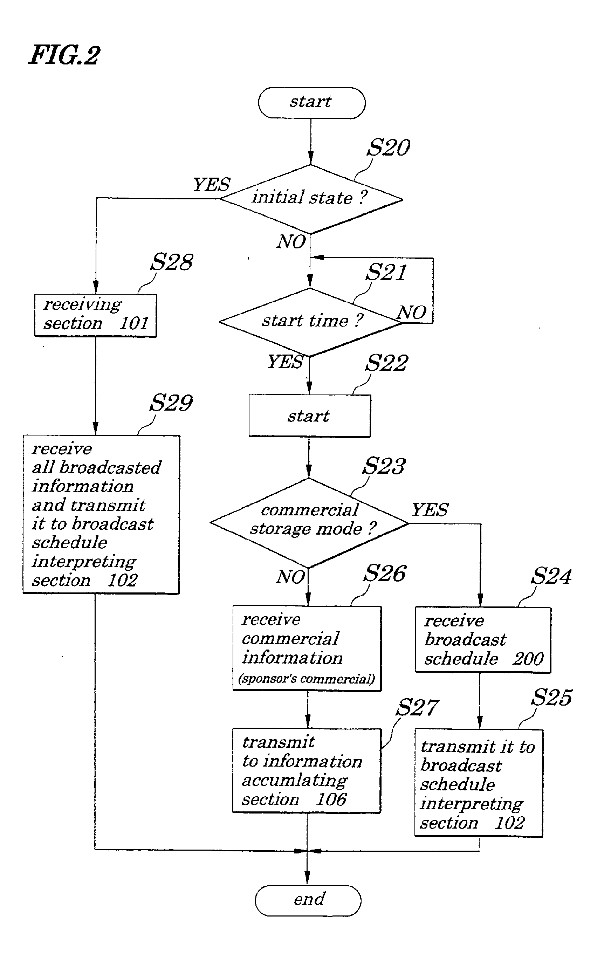

When the information accumulating apparatus 100 for the mobile communication tool, for example, when a switch is turned ON after the information accumulating apparatus 100 is not used for long time, the receiving section 101 is set to an initial state. The initial state is a state set when all broadcast time of data memorized in the received schedule memorizing section 104 passes and the receiving schedule memorizing section 104 becomes vacant. As shown in Fig. 2, in the initial state (step S20), the receiving section 101 is started (step S28). The receiving section 101 receives all broadcasted information and transmits the broadcasted information to the broadcast schedule interpreting section 102 (step S29).

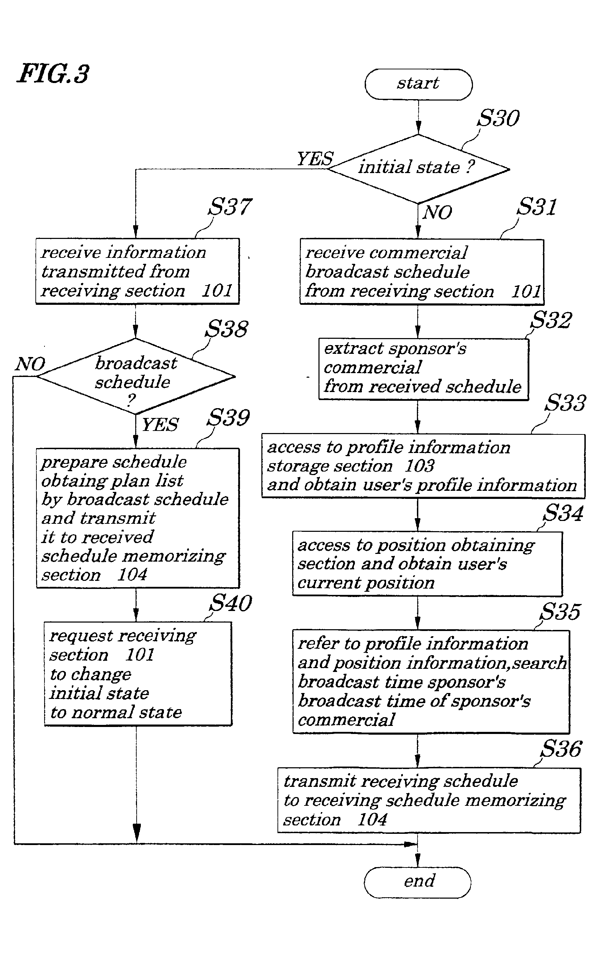

The broadcast schedule interpreting section 102, as shown in Fig. 3, when it is determined that the information accumulating apparatus 100 is in the initial state, receives information from the receiving section 101 (step S37). Then, the broadcast schedule interpreting section 102 determines whether the information received from the receiving section 101 is a broadcast schedule or not (step S38). It is determined whether the received information is a broadcast schedule or not, for example, by extracting tag data included in the received information.

When the information received from the receiving section 101 is the broadcast schedule, the broadcast schedule interpreting section 102 prepares a schedule obtaining plan list and memorizes the schedule obtaining plan list in the received schedule memorizing section 104 (step S39). For example, the schedule obtaining plan list shows times in which the broadcast schedule is broadcasted.

Then, the broadcast schedule interpreting section 102 requests the receiving section 101 to change the initial state to a normal state (step S40).

Next, explanations will be given of a processing operation in the normal state.

As shown in Fig. 2, the receiving section 101 starts based on the schedule obtaining plan list in the received schedule memorizing section 104 by a start command (schedule storage mode) from the timer 105 at a designated time (steps S21 and S22) .

Outside the designated time, the information accumulating apparatus 100 is in a waiting state.

In the commercial storage mode(step S23), namely, when it is time to send the broadcast schedule information, the receiving section 101 is started to obtain the broadcast schedule and receives the broadcast schedule 200 or the like (step S24). The receiving section 101 transmits the received broadcast schedule 200 to the broadcast schedule interpreting section 102 (step S25) .

As shown in Fig. 3, the broadcast schedule interpreting section 102, when it receives the broadcast schedule 200 (step S31), extracts commercials of sponsors from the broadcast schedule 200. A commercial by a sponsor, for example, includes commercial voice data, attribute data showing contents of commercial information and attribute data of a location.

The broadcast schedule interpreting section 102 accesses the profile information storage section 103 and obtains profile information of the user (step S33). For example, as the profile information, a keyword list showing favorites of the user is stored in the profile information storage section 103.

Then, the broadcast schedule interpreting section 102 accesses to the location obtaining section 107 and obtains current location information of the user and the information accumulating apparatus 100 (step S34). For example, latitude, longitude and address showing the current location of the user are obtained.

Then, the broadcast schedule interpreting section 102 refers to the profile information in the profile information storing section 103 and location information in the location obtaining section 107, searches time in which commercials of the sponsor necessary for the user are broadcasted among commercial information of the sponsors in the broadcast schedule 200 and produces a receiving schedule (step S35).

Attribute data of commercial information contents is, for example, a keyword list showing commercial contents and sponsors. In this case, the keyword list of profile information is compared with the attribute keyword list. Information of the user such as latitude, longitude and address is compared with attribute data of commercial information such as latitude, longitude and address. In accordance with the compared result, commercial information necessary for the user is finally determined.

The broadcast schedule interpreting section 102 transmits the produced receiving schedule to the receiving schedule memorizing section 104 (step S36) and the produced receiving schedule is memorized in the receiving schedule memorizing section 104.

The receiving section 101 starts based on the receiving schedule in the receiving schedule memorizing section 104 by a start command (commercial storage mode) from the timer 105 at the designated time (steps S21 and S22). In the commercial storage mode, the receiving section 101 starts at a time at which a commercial necessary for the user is broadcasted.

In the commercial storage mode (step S23), the receiving section 101 receives the commercial information (step S26). Thereafter, the receiving section 101 transmits the commercial information to the information accumulating section 106 (step S27) and the commercial information is accumulated in the information accumulating section 106. With this, the accumulated commercial information is searched by the user at his (her) convenience.

Additionally, the present invention has been explained using radio broadcast in this embodiment. However, the present invention may be applied to various communication systems such as internet, e-mail, service sending information with a portable telephone and a terminal (a home terminal, a car navigation system, a portable terminal and the like) receiving digital broadcast.

It is apparent that the present invention is not limited to the above embodiments but may be changed and modified without departing from the scope and spirit of the invention.

Finally, the present application claims the priority of Japanese Patent Application No. Heill-307561 filed on October 28, 1999, which is herein incorporated by reference.

## Claims

1. An information accumulating apparatus for a mobile communication tool characterized by comprising:
a receiving section (101) for receiving a broadcast including a program, a commercial and a broadcast schedule (200);
a profile information storing section (103) for storing at least information including a favorite of a user;
a location obtaining section (107) for obtaining a current location of said information accumulating apparatus;
a broadcast schedule interpreting section (102) for interpreting said broadcast schedule (200) in said broadcast received by said receiving section (101);
a receiving schedule memorizing section (104) for memorizing a receiving schedule including said broadcast schedule (200) transmitted from said broadcast schedule interpreting section (102) and broadcast time of said broadcast schedule (200);
a timer (105) for referring to said receiving schedule memorized in said receiving schedule memorizing section (104) and for starting said receiving section (101) at a designated time; and
an information accumulating section (106) for accumulating information such as said program and said commercial received by said receiving section (101).

2. The information accumulating apparatus for the mobile communication tool according to Claim 1, characterized in that said broadcast schedule interpreting section (102) interprets said broadcast schedule (200) received by said receiving section (101), grasps a schedule indicating that necessary information for said user is broadcasted based on profile information in said profile information storing section (103) and starts said receiving section (101) at a broadcast time of said necessary information for said user to produce a receiving schedule to receive said necessary information.

3. The information accumulating apparatus for the mobile communication tool according to Claim 1, characterized in that said broadcast schedule interpreting section (102) interprets said broadcast schedule (200) received by said receiving section (101), grasps a schedule indicating that related information to an existing location of said user obtained by said location obtaining section (107) and starts said receiving section (101) at said broadcast time of said related information to produce a receiving schedule for receiving said necessary information.

4. The information accumulating apparatus for the mobile communication tool according to Claim 1, characterized in that said timer (105), when time designated by said receiving schedule comes, gives a start request and an extracting request of said necessary information for said user, though said user does not use said information accumulating apparatus.

5. An information accumulating method for a mobile communication tool characterized by comprising:
a step of receiving a broadcast including a program, a commercial and a broadcast schedule;
a step of storing at least information including a favorite of a user;
a step of obtaining- a current location of an information accumulating apparatus;
a step of interpreting said broadcast schedule in said broadcast;
a step of memorizing a receiving schedule including said broadcast schedule and broadcast time of said broadcast schedule;
a step of referring to said receiving schedule;
a step of starting to receive said broadcast at designated time; and
a step of accumulating information such as said program and said commercial.

6. A media for storing a computer program used for an information accumulating apparatus for a mobile communication tool, said computer program characterized by comprising:
a step of receiving a broadcast including a program, a commercial and a broadcast schedule;
a step of storing at least information including a favorite of a user;
a step of obtaining a current location of an information accumulating apparatus;
a step of interpreting said broadcast schedule in said broadcast;
a step of memorizing a receiving schedule including said broadcast schedule and broadcast time of said broadcast schedule;
a step of referring to said receiving schedule;
a step of starting to receive said broadcast at a designated time; and
a step of accumulating information such as said program and said commercial.
